# EUROPEAN PATENT APPLICATION

(11) **EP 3 637 385 A1**
(43) Date of publication of application: **15.04.2020**
(21) Application number: 18813142.9
(22) Date of filing: 28.03.2018
(51) Int. Cl.: G08G 1/01, G01C 21/26, G08G 1/09, G08G 1/16

(54) **DRIVING-OBSTACLE DETECTING DEVICE AND VEHICLE NAVIGATION SYSTEM**

(30) Priority: 09.06.2017 JP 2017114151
(71) Applicant: Bosch Engineering K.K, Yokohama-shi, Kanagawa 220-6218 (JP)
(72) Inventor: JAGANATHAN Ramkumar, Yokohama-shi Kanagawa 220-6218 (JP)
(74) Representative: Bee, Joachim
(86) International application number: PCT/JP2018/012781
(87) International publication number: WO 2018/225347

(57) **Abstract**

The present invention provides a travel obstruction detection device and a vehicle navigation system capable of appropriately detecting a location of a travel obstruction on a road and thereby providing travel obstruction information before travel of a vehicle. The travel obstruction detection device includes: a data acquisition section that receives data at least including information on location of the vehicle from an on-board controller; an obstruction information generation section that generates the travel obstruction information around a travel location on the basis of a swept path of the vehicle calculated from history of the received location information; and an obstruction information transmission section that transmits the generated travel obstruction information to the on-board controller.

## Description

### Technical Field

The present invention relates to a travel obstruction detection device and a vehicle navigation system.

### Background Art

There is a case where an event that becomes an obstruction of travel occurs on a road where a vehicle such as an automobile travels. For example, a road surface condition detection device that acquires a road surface condition, such as unevenness, a crack, and the like of a road surface, before the travel is disclosed in Patent Literature 1. This road surface condition detection device estimates the road surface condition on the basis of acceleration exerted on an acceleration sensor by rotation of wheels of the vehicle, and transmits information on the road surface condition and on the location of the vehicle to a cloud server. Another vehicle can acquire the road surface condition before the travel on the basis of the location information and the information on the road surface condition.

### Citation List

### Patent Literature

PTL 1: JP-A-2015-229433

### Summary of Invention

### Technical Problem

Here, in the case where a degree of the unevenness, the crack, or the like existing on the road surface is significant, which makes it difficult for the vehicle to travel, and where a large number of the vehicles avoid traveling on the damaged road surface, the road surface condition is not reflected to a detection value of the acceleration sensor. As a result, the information on the road surface condition is not provided to the vehicle that is about to travel on the road surface. In addition, it is considered that, in the case where the travel of the vehicle is restricted not only due to the road surface condition but also due to roadwork, an accident, or the like, the driver can further safely avoid the obstruction when information on such an obstruction is provided in advance to the vehicle.

The present invention has been made in view of the above problem and therefore has a purpose of providing a travel obstruction detection device and a vehicle navigation system capable of appropriately detecting a location of a travel obstruction on a road and thereby providing travel obstruction information before travel of a vehicle.

### Solution to Problem

According to an aspect of the present invention, a travel obstruction detection device that includes: a data acquisition section that receives data at least including information on location of a vehicle from an on-board controller; an obstruction information generation section that generates travel obstruction information around a travel location on the basis of a swept path of the vehicle calculated from history of the received location information; and an obstruction information transmission section that transmits the generated travel obstruction information to the on-board controller is provided.

In addition, according to another aspect of the present invention, a vehicle navigation system including an on-board controller that includes: the above-described travel obstruction detection device; a location information acquisition section that acquires information on location of a host vehicle; a data transmission section that transmits data at least including location information to the travel obstruction detection device; an obstruction information acquisition section that receives travel obstruction information from the travel obstruction detection device; and a navigation control section that performs navigation operation on the basis of the travel obstruction information is provided.

### Advantageous Effects of Invention

As it has been described so far, according to the present invention, the travel obstruction information can be provided before the travel of the vehicle by appropriately detecting the location of the travel obstruction on the road.

### Brief Description of Drawings

Fig. 1 is a schematic view of a vehicle navigation system according to an embodiment of the present invention.
Fig. 2 is a schematic view of a configuration example of a vehicle on which an on-board controller according to the embodiment is mounted.
Fig. 3 is a block diagram of a configuration example of a travel obstruction detection device and the on-board controller according to the embodiment.
Fig. 4 is a flowchart of an example of data transmission processing by the on-board controller.
Fig. 5 is a flowchart of an example of travel obstruction detection processing by the travel obstruction detection device.
Fig. 6 is a flowchart of an example of data reception interval setting processing by the travel obstruction detection device.
Fig. 7 is a flowchart of an example of navigation operation processing by the on-board controller.
Fig. 8 is an explanatory view of an example of navigation display.
Fig. 9 is a flowchart of an example of warning processing by the on-board controller.

### Description of Embodiments

A detailed description will hereinafter be made on a preferred embodiment of the present invention with reference to the accompanying drawings. In the specification and the drawings, components that have substantially the same functional configurations will be denoted by the same reference signs, and a description thereon will not be repeated.

### <1. Overview of Vehicle Navigation System>

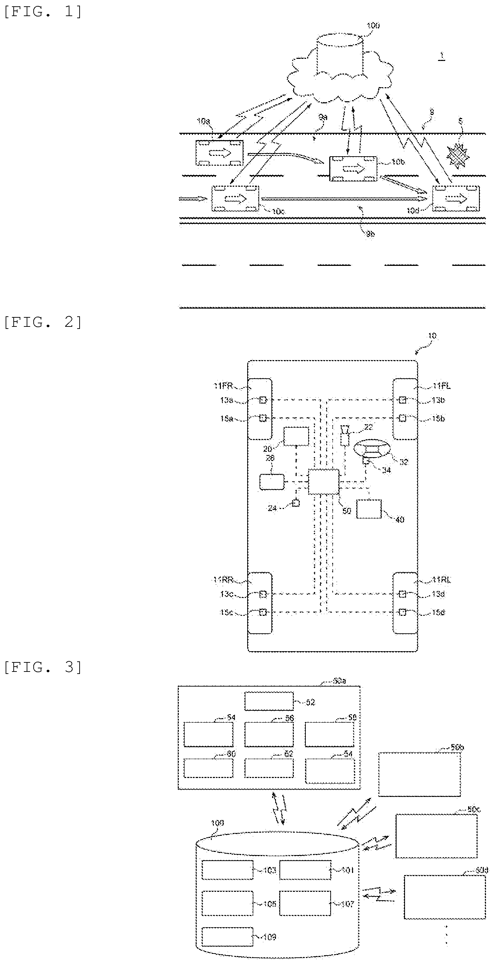

First, a description will be made on an overview of a vehicle navigation system 1 according to this embodiment with reference to Fig. 1. The vehicle navigation system 1 according to this embodiment is a system with which each of vehicles 10a, 10b, 10c, 10d (hereinafter referred to as a vehicle 10 unless otherwise particularly distinguished) traveling on a road 9 communicates with a travel obstruction detection device 100 wirelessly, acquires information on a travel obstruction 5 ahead in an advancing direction in advance, and thereby performs navigation operation of the vehicle 10. The travel obstruction detection device 100 receives data that at least includes location information from the traveling vehicle 10, generates travel obstruction information on the bases of these pieces of the data, and transmits the travel obstruction information to the vehicle 10. The travel obstruction detection device 100 is a cloud server, for example.

For example, as illustrated in Fig. 1, in the case where the travel obstruction 5 is present on a first lane 9a of the two-lane road 9 on either side, the vehicles 10c, 10d traveling on a second lane 9b continue traveling on the second lane 9b while the vehicles 10a, 10b that have traveled on the first lane 9a so far change the lane from the first lane 9a to the second lane 9b in order to avoid the travel obstruction 5. It is considered that, while the travel obstruction 5 is present, almost all the vehicles 10 that travel on the first lane 9a change the lane to the second lane 9b.

Based on an assumption that the plural vehicles 10 travel by avoiding the travel obstruction 5 when the travel obstruction 5 is present on the road 9, just as described, in the case where the travel obstruction detection device 100 according to this embodiment can determine that the vehicle 10 performs a certain type of operation to avoid the travel obstruction 5 from a swept path of the vehicle 10, the travel obstruction detection device 100 determines that the travel obstruction 5 is present on the road 9. The travel obstruction detection device 100 transmits information on the detected travel obstruction 5 to the plural vehicles 10. In this way, each of the vehicles 10 acquires presence of the travel obstruction 5 in advance, and thus a driver can easily avoid the travel obstruction 5.

The road 9 where the vehicle 10 travels is usually wider than a vehicle width, and in many cases, the vehicle 10 travels on a part of the road in a width direction. Even in such a case, the vehicle navigation system 1 according to this embodiment can estimate a present location of the travel obstruction 5 with a high degree of accuracy by using the data including the information on location of the vehicle 10.

Here, the travel obstruction 5 includes events, each of which causes the vehicle 10 to travel by avoiding the location, such as significant unevenness of a surface of the road 9, closure of the road 9, a traffic accident on the road 9, and a fallen object on the road 9. In addition, in the vehicle navigation system 1 according to this embodiment, the travel obstruction detection device 100 can further calculate and transmit information on a speed bump on the road 9, snow accumulation thereon, an incline of a road surface, or a curvature radius of the curved road to each of the vehicles 10.

### <2. Configuration Example of Vehicle>

Next, a description will be made on a configuration example of the vehicle 10 on which an on-board controller 50 for the vehicle navigation system 1 according to this embodiment is mounted with reference to Fig. 2. The vehicle 10 includes the on-board controller 50. The on-board controller 50 receives signals of various sensors or detection devices (hereinafter simply referred to as "detectors") mounted on the vehicle 10, and transmits acquired information from the travel obstruction detection device 100. In addition, the on-board controller 50 receives the travel obstruction information from the travel obstruction detection device 100 and performs the navigation operation of the vehicle 10.

The vehicle 10 includes four rotation sensors 13a, 13b, 13c, 13d, four shock sensors 15a, 15b, 15c, 15d, a Global Positioning System (GPS) unit 20, an imaging unit 22, an acceleration sensor 24, a display device 26, a steering angle sensor 34, and a brake control unit 40.

The rotation sensors 13a, 13b, 13c, 13d (hereinafter referred to as rotation sensors 13 unless otherwise particularly distinguished) and the four shock sensors 15a, 15b, 15c, 15d (hereinafter referred to as shock sensors 15 unless otherwise particularly distinguished) are respectively provided in front, rear, left, and right wheels 11FR, 11FL, 11RR, 11RL (hereinafter referred to as wheels 11 unless otherwise distinguished) of the vehicle 10. The rotation sensor 13 outputs a sensor signal that corresponds to a rotational frequency of the corresponding wheel 11. The shock sensor 15 outputs a sensor signal that corresponds to a shock received by the corresponding wheel 11. The shock sensor 15 is provided in a shock observer provided in the corresponding wheel 11, for example. The sensor signal of each of the rotation sensor 13 and the shock sensor 15 is output to the on-board controller 50.

The GPS unit 20 has a GPS antenna and a GPS device. The GPS device receives radio waves from a GPS satellite via the GPS antenna and calculates a current location of the GPS device, that is, the vehicle 10 by positioning calculation. The GPS unit 20 outputs the calculated location information to the on-board controller 50.

The imaging unit 22 has a camera and an imaging processing device. The camera is an imaging device that has an imaging element such as a charge-coupled device (CCD) or a Complementary metal-oxide-semiconductor (CMOS), and captures an image ahead of the vehicle 10. The image processing device executes known image processing on the basis of imaging data of the camera, so as to recognize a vehicle, an obstruction, the travel lane, a road surface condition, and the like ahead of the vehicle 10. The imaging processing device outputs information on the recognized front to the on-board controller 50. The camera may be a monocular camera or a stereo camera.

The acceleration sensor 24 outputs a sensor signal that corresponds to an inclination in a longitudinal direction and a vehicle width direction of the vehicle 10 with respect to a horizontal direction. The sensor signal of the acceleration sensor 24 is output to the on-board controller 50.

The steering angle sensor 34 outputs a sensor signal that corresponds to a steering angle as a rotation angle of a steering wheel 32. The sensor signal of the steering angle sensor 34 is output to the on-board controller 50.

The brake control unit 40 controls a braking force that is generated by a brake device that is not illustrated and is provided in each of the wheels 11. For example, the brake control unit 40 controls driving of an electromagnetic valve, so as to control a hydraulic pressure that is supplied to a brake caliper provided in each of the wheels 11 and regulate the braking force. Information on the braking force generated on each of the wheels 11 is output to the on-board controller 50. A configuration of the brake device is not particularly limited.

The display device 26 displays a road map and information on a periphery of a travel location of the vehicle 10. The display device 26 has a display panel such as a liquid-crystal display, and display thereof is controlled by the on-board controller 50. The display device 26 may be a head-up display displaying on a front windshield of the vehicle.

### <3. Configuration Example of On-board Controller>

Next, a description will be made on a configuration example of the on-board controller 50 for the vehicle navigation system 1 according to this embodiment with reference to Fig. 3. The on-board controllers 50 (50a, 50b, 50c, 50d) mounted on the vehicles 10 (10a, 10b, 10c, 10d) each include a communication section 52, a travel condition detection section 54, a location information acquisition section 56, an obstruction information reception section 58, a data transmission section 60, a storage section 62, and a navigation control section 64. The on-board controller 50 includes a processor such as a central processing unit (CPU) or a micro-processing unit (MPU). Instead of being constructed of the processor such as the CPU or the MPU, the on-board controller 50 may partially or entirely be constructed of a member in which firmware and the like can be updated, or may be a program module or the like that is executed by a command from the CPU or the like. Alternatively, the on-board controller 50 may be constructed of plural controllers that can communicate with each other.

The storage section 62 stores a computer program executed by the processor, the acquired sensor signals or the acquired information, and information on a calculation result by the processor. The storage section 62 may include storage elements such as read only memory (ROM) that stores the computer program, a control parameter, and the like, and random access memory (RAM) that stores the acquired information, the control parameter, the information on the calculation processing result, and the like. In addition, the storage section 62 may include a memory device that has another storage medium such as a CD-ROM or a storage device.

The communication section 52 is an interface that exchanges the signal with the travel obstruction detection device 100. The communication section 52 communicates with the travel obstruction detection device 100 wirelessly. In the configuration example of the vehicle 10, which is illustrated in Fig. 2, the on-board controller 50 includes the communication section 52. However, the vehicle 10 may include a gateway controller that differs from the on-board controller 50, and the on-board controller 50 may be configured to be communicable with the travel obstruction detection device 100 via the gateway controller.

The travel condition detection section 54 acquires the signals or the information output from the rotation sensor 13, the shock sensor 15, the imaging unit 22, the acceleration sensor 24, the steering angle sensor 34, and the brake control unit 40 provided in the vehicle 10. The travel condition detection section 54 is a function that is realized when the processor executes the computer program. Based on the acquired signals or the acquired information, the travel condition detection section 54 calculates the steering angle, a magnitude of the shock received by each of the wheels 11, a rotational frequency of each of the wheels 11, a vehicle speed, the inclination of the vehicle 10, presence or absence of slippage of each of the wheels 11, and the braking force generated on each of the wheels 11. The calculated information is information on a travel condition. Some of these travel conditions may not be calculated.

The location information acquisition section 56 acquires the location information that is output from the GPS unit 20 provided in the vehicle 10. The location information acquisition section 56 is a function that is realized when the processor executes the computer program. The location information acquisition section 56 acquires the location information per preset cycle.

The obstruction information reception section 58 receives the travel obstruction information that is transmitted from the travel obstruction detection device 100. The obstruction information reception section 58 is a function that is realized when the processor executes the computer program. For example, the obstruction information reception section 58 receives the travel obstruction information per preset cycle.

The data transmission section 60 transmits the data that at least includes the information on location of the vehicle 10 to the travel obstruction detection device 100. The data transmission section 60 is a function that is realized when the processor executes the computer program. For example, the data transmission section 60 transmits the data per preset cycle. In this embodiment, the data transmission section 60 transmits the data including the information on the travel condition and the information on location of the vehicle 10 to the travel obstruction detection device 100.

The navigation control section 64 performs the navigation operation on the basis of the travel obstruction information received from the travel obstruction detection device 100. The navigation control section 64 is a function that is realized when the processor executes the computer program. In this embodiment, the navigation control section 64 reflects the travel obstruction information to road map information displayed on the display device 26 and thereby makes the driver recognize the travel obstruction information. In this embodiment, the navigation control section 64 may specifically display the location of the travel obstruction present on the travel lane. In the case where the on-board controller 50 acquires a three-dimensional virtual image of the travel obstruction information from the travel obstruction detection device 100 at this time, the navigation control section 64 may display the three-dimensional virtual image on the display device 26. In addition, in conjunction with an approach of the vehicle 10 to the travel obstruction, the navigation control section 64 may generate warning sound so as to prompt the driver to exercise caution.

### <4. Configuration Example of Travel Obstruction Detection Device>

A description will be made on a configuration example of the travel obstruction detection device 100 according to this embodiment with reference to Fig. 3. The travel obstruction detection device 100 includes a communication section 101, a data acquisition section 103, an obstruction information generation section 105, an obstruction information transmission section 107, and a storage section 109. The travel obstruction detection device 100 includes the processor such as the CPU or the MPU. Instead of being constructed of the processor such as the CPU or the MPU, the travel obstruction detection device 100 may partially or entirely be constructed of a member in which firmware and the like can be updated, or may be a program module or the like that is executed by a command from the CPU or the like. Alternatively, the travel obstruction detection device 100 may be constructed of plural controllers that can communicate with each other.

The storage section 109 stores a computer program executed by the processor, the acquired sensor signals or the acquired information, and information on calculation results by the processor. The storage section 109 may include storage elements such as read only memory (ROM) that stores the computer program, a control parameter, and the like, and random access memory (RAM) that stores the acquired information, the control parameter, the information on the calculation processing result, and the like. In addition, the storage section 109 may include a memory device that has another storage medium such as a CD-ROM or a storage device.

The communication section 101 is an interface that exchanges the signal with the on-board controller 50. In this embodiment, the travel obstruction detection device 100 is the so-called cloud server, and the communication section 101 communicates with the on-board controller 50 wirelessly.

The data acquisition section 103 acquires the data transmitted from the on-board controller 50. The data acquisition section 103 is a function that is realized when the processor executes the computer program. The acquired data at least includes the information on location of the vehicle 10. In this embodiment, the acquired data includes the information on the travel condition and the information on location of the vehicle 10.

The obstruction information generation section 105 calculates the swept path of the vehicle 10 on the basis of history of the acquired location information. In addition, the obstruction information generation section 105 generates the travel obstruction information around the travel location on the basis of the calculated swept path. The obstruction information generation section 105 is a function that is realized when the processor executes the computer program. For example, the obstruction information generation section 105 may determine that the plural vehicles 10 perform avoidance operation at a particular location by superimposing the information on the calculated swept paths of the plural vehicles 10 on the road map information, and thereby detect the presence of the travel obstruction 5.

In addition, in the travel obstruction detection device 100 according to this embodiment, the obstruction information generation section 105 may detect a road condition on the basis of the information on the travel condition of the vehicle 10. The road condition is a condition such as the unevenness of the road surface, the inclination of the road, the curvature radius of the curved road. In the case where the detected road condition possibly poses a risk to the travel of the vehicle 10, the obstruction information generation section 105 determines the detected road condition as the travel obstruction information. The obstruction information generation section 105 may generate information on the three-dimensional virtual image of the travel obstruction information on the basis of information on the detected road condition, information on the swept path, and the road map information.

The obstruction information transmission section 107 transmits the generated travel obstruction information to the on-board controller 50. The obstruction information transmission section 107 is a function that is realized when the processor executes the computer program. In the case where the obstruction information generation section 70 generates the information on the three-dimensional virtual image, the obstruction information transmission section 107 also transmits the information on the three-dimensional virtual image to the on-board controller 50.

### <5. Operation Example of Vehicle Navigation System>

Next, a description will be made on an operation example of the vehicle navigation system 1 according to this embodiment.

### (5-1. Data Transmission Processing by On-Board Controller)

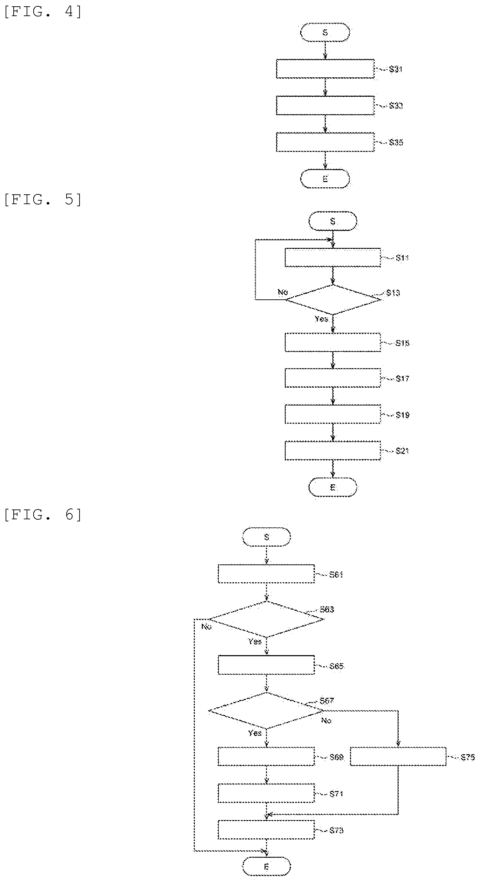

Fig. 4 is a flowchart of data transmission processing by the on-board controller 50.

First, the travel condition detection section 54 of the on-board controller 50 detects the travel condition of the host vehicle 10 (step S31). More specifically, the travel condition detection section 54 acquires the signals or the information output from the rotation sensors 13, the shock sensors 15, the imaging unit 22, the acceleration sensor 24, the steering angle sensor 34, and the brake control unit 40 provided in the vehicle 10. In addition, based on the acquired signals or the acquired information, the travel condition detection section 54 calculates the steering angle, the magnitude of the shock received by each of the wheels 11, the rotational frequency of each of the wheels 11, the vehicle speed, the inclination of the vehicle 10, the slippage of each of the wheels 11, and the braking force generated on each of the wheels 11. Some of these travel conditions may not be calculated.

Next, the location information acquisition section 56 of the on-board controller 50 acquires the information on location of the host vehicle 10 (step S33). More specifically, the location information acquisition section 56 acquires the location information that is output from the GPS unit 20 provided in the vehicle 10. Next, the data transmission section 60 of the on-board controller 50 transmits the data that at least includes the location information and the information on the travel condition of the host vehicle 10 to the travel obstruction detection device 100 via the communication section 52 (step S35).

The on-board controller 50 executes the data transmission processing, which is illustrated in Fig. 4, per preset cycle. Alternatively, the on-board controller 50 may execute the data transmission processing when receiving a transmission request from the travel obstruction detection device 100.

### (5-2. Travel Obstruction Detection Processing by Travel Obstruction Detection Device)

Fig. 5 is a flowchart of travel obstruction detection processing by the travel obstruction detection device 100.

First, the data acquisition section 103 of the travel obstruction detection device 100 receives the data that at least includes the information on location of the vehicle 10 from the on-board controller 50 (step S11). In this embodiment, the data acquisition section 103 receives the data that includes the information on the travel condition and the information on location of the vehicle 10. The data acquisition section 103 receives the data from the plural vehicles 10, on each of which the on-board controller 50 is mounted. The data acquisition section 103 stores the received data that includes the location information and the information on the travel condition in the storage section 109.

Next, the data acquisition section 103 determines whether a specified period, which is set in advance as a period in which the data acquisition section 103 receives the data from the on-board controller 50, has elapsed (step S13). The specified period is set to an appropriate time that is enough to determine the presence or the absence of the travel obstruction 5 on the basis of the received data. For example, the specified period may be set to five to ten minutes.

The data acquisition section 103 may shorten an interval for receiving the data on the basis of the number of pieces of the data received in the specified period in the past, so as to increase the number of reception of the data. In this way, an acquisition interval of the information on location of the same vehicle 10 is shortened. Thus, it is possible to further accurately calculate the swept path of the vehicle 10. Alternatively, the data acquisition section 103 may change duration of the specified period on the basis of the number of the pieces of the data received in the specified period in the past. For example, in the case where the number of the pieces of the data received in a certain period is small and thus reliability of the generated travel obstruction information is low, the specified period may be extended.

If the specified period has not elapsed (S13/No), the processing returns to step S11, and the data acquisition section 103 receives the data from the on-board controller 50 again. On the other hand, if the specified period has elapsed (S13/Yes), the obstruction information generation section 105 of the travel obstruction detection device 100 calculates the swept path of each of the vehicles 10 on the basis of the history of the location information in the data accumulated in the storage section 109 (step S15). The obstruction information generation section 105 calculates the swept path of each of the vehicles 10 on the basis of the history of the location information.

Next, the obstruction information generation section 105 generates the travel obstruction information around the travel location on the basis of the information on the swept path of the vehicle 10 (step S17). For example, the obstruction information generation section 105 integrates the information on the swept path of each of the vehicles 10, which is accumulated in the storage section 109, and the road map information, and determines the avoidance operation of each of the vehicles 10 on the road 9, so as to specify the location of the travel obstruction 5. For example, when recognizing that the plural vehicles 10 travel in a manner to avoid the particular location on the road 9, the obstruction information generation section 105 determines that the travel obstruction 5 is present at the avoided position.

The obstruction information generation section 105 may determine the presence of the travel obstruction 5 by using the information on the travel condition of the vehicle 10 and the information on the swept path of the vehicle 10. For example, the obstruction information generation section 105 may determine that such a travel obstruction 5 that can be recognized by the driver in an approaching state is present in the case where the braking force on each of the wheels 11 is rapidly increased immediately before turning operation of the vehicle 10 that is detected from the swept path of the vehicle 10. Alternatively, the obstruction information generation section 105 may detect the travel obstruction 5 on the road 9 by executing the image processing of the imaging information ahead of the vehicle 10 that is acquired by using the imaging unit 22.

Furthermore, in this embodiment, the obstruction information generation section 105 may also detect the condition of the road 9 on the basis of the information on the travel condition of the vehicle 10. For example, the curvature radius of the road 9 can be estimated on the basis of the information on the steering angle that is detected by using the steering angle sensor 34. In addition, an inclination angle of the road 9 can be estimated on the basis of information on the inclination angle that is detected by the acceleration sensor 24. Furthermore, the unevenness of the road surface, the speed bump, and a snow accumulation condition can be estimated on the basis of information on the rotational frequency of each of the wheels 11 that is detected by using the rotation sensor 13 and information on the shock to each of the wheels 11 that is detected by using the shock sensor 15, for example. Then, when determining that the detected condition of the road 9 is in a state of possibly affecting the travel of the vehicle 10, the obstruction information generation section 105 may determine that the travel obstruction 5 is present on the road surface at the travel location of the vehicle 10. In particular, it is possible to improve detection accuracy of the condition of the road 9 by superimposing the information on the travel conditions received from the plural vehicles 10 to detect the condition of the road 9.

At this time, the obstruction information generation section 105 may generate information on a three-dimensional virtual image of the road 9 on the basis of the information on the detected condition of the road 9, the information on the swept paths, and the road map information. The generated three-dimensional virtual image is transmitted to the on-board controller 50 in each of the vehicles 10. In this way, it is not necessary to generate the information on the three-dimensional virtual image in each of the vehicles 10, and the same information on the three-dimensional virtual image can be shared among the plural vehicles 10.

Next, the obstruction information generation section 105 rewrites the information on the travel obstruction 5 stored in the storage section 109, and updates the information on the travel obstruction 5 to the latest information thereon (step S19). At this time, the obstruction information generation section 105 may delete data that is used to generate the latest information on the travel obstruction 5 from the storage section 109. In this way, in the next period, the information on the travel obstruction 5 is generated on the basis of the data accumulated in such a period. Thus, the latest information on the travel obstruction 5 can be generated as needed. In addition, it is possible to prevent a volume of the data accumulated in the storage section 109 from becoming enormous.

Next, the obstruction information transmission section 107 transmits the information on the travel obstruction 5 to the on-board controller 50 in the vehicle 10 via the communication section 101 (step S21). This information on the travel obstruction 5 may be transmitted to all the vehicles 10, on each of which the on-board controller 50 is mounted, or may be transmitted toward the vehicle 10 that travels within a specified distance from the location where the travel obstruction 5 is present.

The travel obstruction detection device 100 executes the detection processing of the travel obstruction 5, which is illustrated in Fig. 5, per preset cycle, and provides the on-board controller 50 in each of the vehicles 10 with the information on the travel obstruction 5.

### (5-3. Another Example of Travel Obstruction Detection Processing by Travel Obstruction Detection Device)

The interval that the data acquisition section 103 of the travel obstruction detection device 100 receives the data from the on-board controller 50 and an interval that the travel obstruction transmission section 107 transmits the information on the travel obstruction 5 or the information on the condition of the road 9 to the on-board controller 50 may appropriately be changed.

Fig. 6 is a flowchart of another example of the travel obstruction detection processing by the travel obstruction detection device 100.

First, the data acquisition section 103 of the travel obstruction detection device 100 receives the data that at least includes the information on location of the vehicle 10 and the information on the travel condition thereof from the on-board controller 50 at the preset reception interval (step S61).

Next, the data acquisition section 103 determines whether the received data differs from the information on the travel obstruction 5 or the information on the condition of the road 9 that is already stored in the storage section 109 of the travel obstruction detection device 100 (step S63) . For example, in the case where the swept path of the vehicle 10 in the newly received data passes the location where the presence of the travel obstruction 5 is recognized, or in the case where the travel condition of the vehicle 10 in the newly received data shows a different condition at a position where presence of the unevenness or a tight curve of the road 9 is recognized, the data acquisition section 103 determines that the received data differs from the information that is already stored in the storage section 109.

If the received data does not differ from the information that is already stored in the storage section 109 (S63/No), the data acquisition section 103 maintains the current data reception interval and terminates the processing. On the other hand, if the received data differs from the information that is already stored in the storage section 109 (S63/Yes), the data acquisition section 103 requests all the vehicles 10, each of which currently travels around the target road 9, to shorten the data transmission interval, that is, to increase a data transmission frequency (step S65).

Next, the data acquisition section 103 determines whether all the vehicles 10, each of which currently travels around the target road 9, avoid the particular location on the road 9 (step S67). If none of the vehicles 10 avoids the particular location on the road 9 (S67/No), the data acquisition section 103 considers that data mismatching temporarily occurs, and thus ignores the data (step S75). On the other hand, if all the vehicles 10 avoid the particular location on the road 9 (S67/Yes), the obstruction information generation section 105 detects the travel obstruction 5 or the condition of the road 9 on the basis of the newly acquired data, and updates the information on the travel obstruction 5 or the information on the condition of the road 9, which is stored in the storage section 109, to information to which the latest condition is reflected (step S69).

Next, the obstruction information transmission section 107 transmits the updated information on the travel obstruction 5 and the updated information on the condition of the road 9 to the on-board controller 50 in each of the vehicles 10 (step S71). That is, in the example of the flow chart illustrated in Fig. 6, the information on the travel obstruction 5 and the information on the condition of the road 9 are transmitted to the on-board controller 50 only when the information on the travel obstruction 5 or the information on the condition of the road 9 is updated. After the processing in step S71 or step S75 is finished, the data acquisition section 103 requests all the vehicles 10 to return the data transmission interval to the original interval, that is, to reduce the data transmission frequency, and then terminates the processing (step S73).

As it has been described so far, by changing the data transmission interval from the on-board controller 50 to the travel obstruction detection device 100 and the data transmission interval from the travel obstruction detection device 100 to the on-board controller 50, a data communication frequency commensurate with necessity can be set. Thus, it is possible to reduce loads on the on-board controller 50 and the travel obstruction detection device 100. In addition, in the above example, in the case where there is a discrepancy between the data received from the on-board controller 50 and the currently stored data, the travel obstruction detection device 100 gathers the latest data further promptly and updates the currently stored information to the latest information on the travel obstruction 5 and the latest information on the condition of the road 9. In this way, the travel obstruction detection device 100 can provide the on-board controller 50 with the latest information on the travel obstruction 5 and the latest information on the condition of the road 9.

### (5-4. Navigation Operation Processing by On-Board Controller)

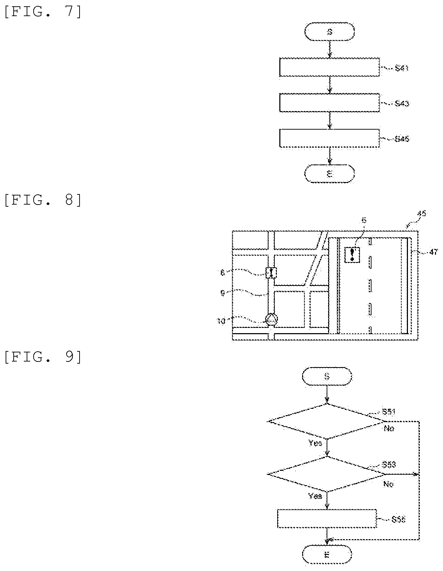

Fig. 7 is a flowchart of an example of navigation operation processing by the on-board controller 50.

First, the obstruction information reception section 58 of the on-board controller 50 receives the information on the travel obstruction 5 that is transmitted from the travel obstruction detection device 100 (step S31). This information on the travel obstruction 5 includes information that specifically indicates the location of the travel obstruction 5 on the road 9. For example, in the case of the two or more lane road 9 on either side, the information on the travel obstruction 5 includes information on which lane the travel obstruction 5 is present or information on at which of center, right, and left positions of the road 9 the travel obstruction 5 is present. The obstruction information reception section 58 may receive the information on the travel obstruction 5 that is transmitted at a specified time interval during the travel of the vehicle 10, or may request the transmission of the information on the travel obstruction 5 to the travel obstruction detection device 100 and receive the information on the travel obstruction 5 when an occupant such as the driver sets a destination in the vehicle navigation system 1. Furthermore, the obstruction information reception section 58 may receive the information on the three-dimensional virtual image of the condition of the road 9 and the information on the travel obstruction 5.

Next, the navigation control section 64 of the on-board controller 50 controls the navigation operation by using the received information on the travel obstruction 5 (step S43) . In this embodiment, the navigation control section 64 reflects the information on the travel obstruction 5 to navigation display that is displayed on the display device 26. Fig. 8 is an example of the navigation display by the navigation control section 64. In this navigation display, in the case where the host vehicle 10 approaches the travel obstruction 5 while a symbol 6, which indicates the presence of the travel obstruction 5, is displayed on a road map in a reduced scale displayed on a display screen 45, an enlarged window 47 appears in a right half of the display screen 45, and the location of the travel obstruction 5 on the road 9 is specifically displayed by the symbol 6. Thus, the occupant such as the driver can comprehend the location of the travel obstruction 5, which exists on the road 9 to be traveled from now on, in advance, and thus can safely avoid the travel obstruction 5.

In the case where the obstruction information reception section 58 receives the information on the three-dimensional virtual image of the road 9 from the travel obstruction detection device 100, the navigation control section 64 may display the three-dimensional virtual image on the display device 26.

Next, the navigation control section 64 executes warning processing (step S45). The warning processing is processing to prompt the occupant such as the driver to exercise the caution in the case where the travel obstruction 5 is present ahead in the advancing direction of the host vehicle 10.

Fig. 9 is a flowchart of an example of the warning processing.

First, the navigation control section 64 determines whether the travel obstruction 5 is present ahead in the advancing direction of the host vehicle 10 (step S51). More specifically, the navigation control section 64 determines whether the travel obstruction 5 is present ahead on the road 9 that the host vehicle 10 travels. If the travel obstruction 5 is not present ahead in the advancing direction of the host vehicle 10 (S51/No), the processing returns to the start, and the navigation control section 64 makes the determination in step S51 again.

On the other hand, if the travel obstruction 5 is present ahead in the advancing direction of the host vehicle 10 (S51/Yes), the navigation control section 64 determines whether the host vehicle 10 approaches the travel obstruction 5 (step S53). For example, the navigation control section 64 determines whether a distance between the host vehicle 10 and the travel obstruction 5 present ahead in the advancing direction becomes shorter than a preset distance. If the host vehicle 10 does not approach the travel obstruction 5 (S53/No), the processing returns to the start, and the navigation control section 64 makes the determination in step S51.

On the other hand, if the host vehicle 10 approaches the travel obstruction 5 (S53/Yes), the navigation control section 64 executes annunciation processing such as generation of voice or the warning sound (step S55). In this way, even in the case where the occupant such as the driver is not looking at the navigation display, the occupant such as the driver can acknowledge the travel obstruction 5 and performs the safe avoidance operation.

### <6. Effects of This Embodiment>

As it has been described so far, the travel obstruction detection device 100 according to this embodiment generates the travel obstruction information around the travel location on the basis of the swept path of the vehicle 10, which is calculated from the history of the location information received from the vehicle 10, and transmits the travel obstruction information to the on-board controller 50 mounted on the vehicle 10. Since the travel obstruction detection device 100 generates the information on the travel obstruction 5 on the basis of the swept path of the vehicle 10, the travel obstruction detection device 100 can appropriately detect the location of the travel obstruction 5.

With the vehicle navigation system 1 according to this embodiment, each of the vehicles 10 can specifically acquire the location of the travel obstruction 5. Thus, it is possible to improve reliability that the driver avoids the travel obstruction 5.

The travel obstruction detection device 100 according to this embodiment detects the travel obstruction 5 by using the swept paths of the plural vehicles 10 on the basis of the data that is received in the preset specified period. Thus, it is possible to improve the estimation accuracy of the presence of the travel obstruction 5. In addition, in the case where the number of the pieces of the data that is received in the specified period is small, the travel obstruction detection device 100 can accumulate the large number of the pieces of the data by shortening the data reception interval. Thus, it is possible to improve the estimation accuracy of the presence of the travel obstruction 5.

The travel obstruction detection device 100 according to this embodiment detects the travel obstruction 5 by using the information on the travel condition and the information on the swept path of the vehicle 10. Thus, even in the case where the traveling road is in a dangerous state for the travel of the vehicle, the travel obstruction 5 can be detected. Therefore, it is possible to improve the reliability that the driver avoids the travel obstruction 5 relating to the road condition.

The travel obstruction detection device 100 according to this embodiment changes the data transmission interval from the on-board controller 50 to the travel obstruction detection device 100 and the data transmission interval from the travel obstruction detection device 100 to the on-board controller 50. As a result, the data communication frequency commensurate with necessity can be set. Thus, it is possible to reduce the loads on the on-board controller 50 and the travel obstruction detection device 100. In addition, in the case where there is the discrepancy between the data received from the on-board controller 50 and the currently stored data, the travel obstruction detection device 100 gathers the latest data further promptly and updates the currently stored information to the latest information on the travel obstruction 5 and the latest information on the condition of the road 9. In this way, the travel obstruction detection device 100 can provide the on-board controller 50 with the latest information on the travel obstruction 5 and the latest information on the condition of the road 9.

The travel obstruction detection device 100 according to this embodiment may detect the condition of the road 9 on the basis of the information received from the vehicle 10, and may generate the three-dimensional virtual image of the road 9 on the basis of the information on the condition of the road 9, the information on the swept path, and the road map information. The generated three-dimensional virtual image is transmitted to each of the vehicles 10 and is used for navigation control. Thus, each of the vehicles 10 does not generate the information on the three-dimensional virtual image, but the same information on the three-dimensional virtual image can be shared among the plural vehicles 10.

The preferred embodiment of the present invention has been described in detail so far with reference to the accompanying drawings. However, the present invention is not limited to such an embodiment. It is obvious that a person who has basic knowledge in the technical field to which the present invention pertains could have easily arrived at various modification examples and application examples that fall within the scope of the technical idea described in the claims. It is understood that those naturally fall within the technical scope of the present invention.

For example, in the above embodiment, the information on the travel obstruction 5 or the information on the three-dimensional virtual image of the road 9, which is transmitted to the vehicle 10 side, are used for navigation control operation. However, the present invention is not limited to such an example. In the case where the vehicle 10 is a vehicle that can execute automated driving control, the obstruction information reception section 58 may transmit the received information on the travel obstruction 5 or the received information on the three-dimensional virtual image of the road 9 to a unified controller that integrally controls automated driving. In this case, the unified controller may control acceleration/deceleration, the steering angle, the braking force, or the like of the vehicle 10 by using the information on the travel obstruction 5 or the information on the three-dimensional virtual image of the road 9 in addition to the information that is acquired by the camera or the sensor mounted on the vehicle 10.

### Reference Signs List

- 1:: Vehicle navigation system
- 5:: Travel obstruction
- 9:: Road
- 9a:: First lane
- 9b:: Second lane
- 10:: Vehicle
- 50:: On-board controller
- 52:: Communication section
- 54:: Travel condition detection section
- 56:: Location information acquisition section
- 58:: Obstruction information reception section
- 60:: Data transmission section
- 64:: Navigation control section
- 100:: Travel obstruction detection device
- 101:: Communication section
- 103:: Data acquisition section
- 105:: Obstruction information generation section
- 107:: Obstruction information transmission section

## Claims

1. A travel obstruction detection device comprising:
a data acquisition section receiving data that at least includes information on location of a vehicle from an on-board controller;
an obstruction information generation section generating travel obstruction information around a travel location on the basis of a swept path of the vehicle that is calculated from history of the received location information; and
an obstruction information transmission section transmitting the generated travel obstruction information to the on-board controller.

2. The travel obstruction detection device according to claim 1, wherein
the obstruction information generation section integrates the swept path of the vehicle and road map information to generate travel obstruction information present on a road.

3. The travel obstruction detection device according to claim 1 or 2, wherein
the obstruction information generation section generates the travel obstruction information on the basis of the data received from the plural on-board controllers in each preset specified period.

4. The travel obstruction detection device according to claim 3, wherein
the obstruction information generation section changes an interval to receive the data on the basis of the number of pieces of the data received in the specified period.

5. The travel obstruction detection device according to claim 3 or 4, wherein
after generating the travel obstruction information on the basis of the data received in the specified period, the obstruction information generation section deletes the data that is used to generate the travel obstruction information.

6. The travel obstruction detection device according to any one of claims 1 to 5, wherein
the data acquisition section receives data that further includes information on a travel condition of the vehicle, and
the obstruction information generation section generates the travel obstruction information on the basis of the information on the swept path and the information on the travel condition.

7. The travel obstruction detection device according to claim 6, wherein
the information on the travel condition includes at least one piece of information among information on a steering angle of a steering wheel, information on a rotational frequency of a wheel, information on a vehicle speed, information on a shock generated on a shock monitoring device of the wheel, information on an inclination angle of the vehicle, information on a slipping amount of the wheel, and information on a braking force of the wheel.

8. A vehicle navigation system comprising:
the travel obstruction detection device according to any one of claims 1 to 7; and
an on-board controller that has: a location information acquisition section that acquires information on location of a host vehicle; a data transmission section that transmits data at least including the location information to the travel obstruction detection device; an obstruction information acquisition section that receives travel obstruction information from the travel obstruction detection device; and a navigation control section that performs navigation operation on the basis of the travel obstruction information.
